# EUROPEAN PATENT APPLICATION

(11) **EP 4 198 949 A1**
(43) Date of publication of application: **21.06.2023**
(21) Application number: 21858159.3
(22) Date of filing: 02.08.2021
(51) Int. Cl.: G09B 29/10, G08G 1/005, G08G 1/09, G08G 1/0969, G08G 1/13, G01C 21/26, G01C 21/34

(54) **NAVIGATION USING COMPUTER SYSTEM**

(30) Priority: 18.08.2020 JP 2020137703
(71) Applicant: Bebridge, Inc., Tokyo 100-0005 (JP)
(72) Inventor: NOZAKI, Yoshihiro, Tokyo 100-0005 (JP)
(74) Representative: Wittmer, Maximilian
(86) International application number: PCT/JP2021/028616
(87) International publication number: WO 2022/039011

(57) **Abstract**

A navigation device, a navigation system, a navigation method, a navigation program, and a storage medium on which the navigation program is stored according to the present disclosure guide a user to a destination by calculating location information of one or more target points during route guidance based on route information from a current location to the destination, and generating and displaying an augmented reality image over a captured image captured by a camera, after correcting a location of a target point to be passed through first to another location of a point to be an actual target, in which the another location and a distance and a direction of progress from the current location are shown, in the case of moving along the route from the current location to the destination.

## Description

### [Field of the Invention]

The present disclosure relates to a navigation using a computer system.

### [Background Art]

There have been many technologies proposed for navigation utilizing a combination of location information and map information from the past. In recent years, a technology about the navigation suitable for moving from a current location to a destination in an urban district with an augmented reality (AR) image made by combining an image captured by a camera has been proposed since a mobile terminal having a camera such as a so-called smart phone is widely spread. For example, such technologies are described in the patent references 1 and 2.

In the patent reference 1, a system using visual landmarks (for example, a landmark building and the like) is proposed in order for a mobile terminal to determine a progressing direction while the mobile terminal is stationary. The patent reference 2 describes a technology for guiding a user to a destination by an augmented reality image in which a character image is superimposed on an image of the real world wherein the character proceeds along a route.

### [Prior Art References]

### [Patent Reference]

Patent Reference 1: JP 2019-109252, A
Patent Reference 2: JP 2014-20863, A

### [Summary of the Invention]

The present disclosure provides a navigation device, a navigation system, a navigation method, a navigation program, and a storage medium storing the navigation program such that a user can reach a destination by tracing target points in order as an augmented reality image generated by combining location information of one or more target points along the route to the destination with an image captured by a camera to be displayed on a screen of user's mobile terminal or the like using an augmented reality technology, is displayed on the screen of the user's mobile terminal or the like.

The present disclosure discloses a navigation device that provides a guidance by showing images on a display screen such that a destination can be reached via a target point to be passed through first from a current location of the navigation device, wherein the navigation device comprises: a current location calculation unit to calculate location information of a current location of the navigation device; a route information acquisition unit, wherein location information of the destination and the location information of the current location calculated by the current location calculation unit is sent to a first server device that calculates route information showing a route from the current location to the destination, and the route information acquisition unit receives the calculated route information from the first server device; a target point location calculation unit to calculate and store location information of a location of one or more target points to become a target in a guidance of the route from the route information; a first target point location extraction unit to extract location information of a location of a first target point to be passed through first in a case of progressing the route from the current location toward the destination from one or more target points calculated and stored by the target point location calculation unit; a camera to capture an image outside of the navigation device; an angle calculation unit to calculate an azimuth angle and an elevation angle with respect to an optical axis of the camera; a target point location correction unit to correct the location of the first target point to be displayed on the display screen from the azimuth angle and the elevation angle calculated by the angle calculation unit and from location information of the navigation device; a distance-direction calculation unit to calculate a distance and a direction of progress, in a case of progressing a route from the current location to a corrected location of the first target point, based on the current location and the location of the first target point corrected by the target point location correction unit; and an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera; wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location. Here, the calculation unit may be included in a calculation device. More specifically, the current location calculation unit is included in the current location calculation device, the target point location calculation unit is included in the target point location calculation device, the angle calculation unit is included in the angle calculation device, the distance-direction calculation unit is included in the distance-direction calculation device, respectively.

### [Brief Description of the Drawings]

Fig. 1 shows a diagram illustrating an example of an entire configuration of a navigation system
Fig. 2 shows a block diagram of a navigation device of a first embodiment.
Fig. 3A shows a hardware configuration diagram of the navigation device.
Fig. 3B shows a front view of a smart phone.
Fig. 3C shows a rear view of the smart phone.
Fig. 4 shows a flowchart illustrating an operation of the navigation device.
Fig. 5 shows a flowchart illustrating a process of a target point location calculation.
Fig. 6 shows a diagram illustrating a process of a target point location correction.
Fig. 7 shows a diagram illustrating an example of an augmented reality image generated and displayed through an augmented reality image display process.
Fig. 8 shows a diagram illustrating an augmented reality image generated and displayed through an augmented reality image display process in the case where a corrected location of a first target point is not included in a screen display range of an image captured by a camera.
Fig. 9 shows a diagram illustrating a sample in which a map generated through a map display process is displayed.
Fig. 10 shows a block diagram of a navigation device of second embodiment.

### [Embodiments for Carrying Out the Invention]

The present disclosure provides a navigation device that provides a navigation device to provide a guidance by showing images on a display screen such that a destination can be reached via a target point to be passed through first from a current location of the navigation device, wherein the navigation device includes: a current location calculation unit to calculate location information of a current location of the navigation device; a route information acquisition unit, wherein location information of the destination and the location information of the current location calculated by the current location calculation unit is sent to a first server device that calculates route information showing a route from the current location to the destination, and the route information acquisition unit receives the calculated route information from the first server device; a target point location calculation unit to calculate and store location information of a location of one or more target points to become a target in a guidance of the route from the route information; a first target point location extraction unit to extract location information of a location of a first target point to be passed through first in a case of progressing the route from the current location toward the destination from one or more target points calculated and stored by the target point location calculation unit; a camera to capture images of outside of the navigation device; an angle calculation unit to calculate an azimuth angle and an elevation angle with respect to an optical axis of the camera; a target point location correction unit to correct the location of the first target point to be displayed on the display screen from the azimuth angle and the elevation angle calculated by the angle calculation unit and from location information of the navigation device; a distance-direction calculation unit to calculate a distance and a direction of progress, in a case of progressing a route from the current location to a corrected location of the first target point, based on the current location and the location of the first target point corrected by the target point location correction unit; and an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera; wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location. In this way, an effect may be achieved such that the destination can be reached by tracing target points of the augmented reality image in order, which displayed on the navigation device. Here, the another target point may be referred to as a target point to be passed through first in the next time. For example, when a user of the navigation device reaches the first target point, the first target point may be referred to as another or next current location. Then, in order to progress toward the destination, the target point to be passed through first in the next time may be referred to as another or next first target point. Then, repetition is made in the same way. With respect to the another first target point, the present document is in the same way.

In the present application, the location information corresponds to coordinate information that can identify a three-dimensional location such as, but not limited to, coordinates measured by a global positioning system (hereinafter referred to as GPS). Also, the route information indicating the route from the current location to the destination is a collection of location information with the order along the route from the current location to the destination. By determining the location of the target point by location information, the problem of not being able to find the target point on the route can be solved.

In the aforementioned technology described in the patent reference 1, the visual landmark whose information have been registered beforehand must appear in an image captured by a camera and the user must locate the visual landmark with registered information by using the camera according to the technology described in the patent reference 1. Therefore, in the middle of moving along the route, a situation where the visual landmark cannot be located may happen. In addition, a situation where the system cannot find the visual landmark may happen since an image of the visual landmark having been registered before may not be necessarily the same as that of the visual landmark in the image captured by the camera. In addition, a situation where the system cannot find the visual landmark may happen in the case where the image captured by camera at night or the like is not clear.

According to the present disclosure, the target point is a point on the route to the destination, and, unlike the landmark in the technology described in the patent reference 1, is determined by location information, such that the problems that the technology described in the patent reference 1 can be solved wherein the problems may be that the system cannot find the visual landmark because the image of the visual landmark having been registered beforehand is not necessarily the same as that of the visual landmark in the image captured by the camera, that the visual landmark cannot be found due to the surrounding lightness or darkness, and so on.

In addition, according to the present disclosure, at least one target point is set on the route such that the problem in the technology described in the patent reference 1 that the visual landmark cannot be found in the middle of moving along the route can be solved.

In the aforementioned technology described in the patent reference 2, an augmented reality image in which an image of a character progressing along the route is superimposed on an image of the real world would guide the user to the destination, but it may be a problem that the target point on the route calculated based on the location information by GPS (location the character image points in an example of the patent reference 2) is actually shifted apart from the point to be the target. For example, it is the case where the middle of the roadway is indicated as the target point although the user is moving on foot. In the case where the navigation is performed in the urban district, such an indication of the target point is uncomfortable to the user so as to be impractical.

According to the present disclosure, the aforementioned problem can be solved by correcting the location of the target point displayed in the augmented reality image based on the location information of the navigation device and the azimuth angle and the elevation angle about the optical axis of the camera included in the navigation device.

In the navigation device of the present disclosure, the target point location correction unit corrects the location of the first target point to a location on an extension of the direction of progress of the navigation device calculated from the previous location information of the navigation device and at a distance from the current location to the corrected location of the first target point and at a height as high as the camera, in order to display it on the display screen. Hence, the problem that the target point along the route is displayed in the guidance apart from the point to be the actual target can be solved.

In the navigation device according to the present disclosure, a point is referred to as another first target point, at which a direction of progress changes from a previous direction of progress beyond a predetermined threshold when progressing along the route based on the route information, and the target point location calculation unit calculates and stores location information of a location of the another first target point. Hence, the problem that the target point cannot be found along the route from the current location to the destination can be solved. Here, the predetermined threshold will be described in embodiments later.

In the navigation device according to the present disclosure, the augmented reality image display unit is characterized by generating and displaying an augmented reality image showing a direction to which the camera is oriented such that a location of the first target point is included in an image captured by the camera over the image captured by the camera in a case where the location of the first target point is not included in the image captured by the camera while an augmented reality image showing a distance and a direction of progress in a case of progressing to the corrected first target point calculated by the distance-direction calculation unit and a corrected location of the first target point by the target point location correction unit is not generated. Hence, the problem that the target point along the route is lost because the target point cannot be found in the augmented reality image displayed on the navigation device can be solved.

In the navigation device according to the present disclosure, the augmented reality image display unit is characterized by acquiring attribute information about the first target point and its surroundings from a second server device that stores attribute information about one or more target points and their surroundings, and further displaying the attribute information about the first target point and its surroundings over the image captured by the camera on the display screen. Here, the attribute information of the target point and the attribute information of surroundings of the target point are described in embodiments later.

In the navigation device according to the present disclosure, the navigation device is characterized by comprising: a map display unit that acquires map information from a third server device that stores map information, generates a map image, and displays the current location, the destination, the route, and the one or more target points over the generated map image on the display screen.

In the navigation device according to the present disclosure, a rout information calculation unit to calculate the route information showing the route from the current location to the destination may be included instead for the route information acquisition unit to receive the route information from the first server device.

In the present disclosure, a navigation system is characterized by including: a navigation device to provide guidance by display on a display screen such that a destination can be reached via a target point to be passed through first from a current location of the navigation device; a first server device to calculate route information showing a route from the current location to the destination; a second server device to store attribute information of one or more target points and their surroundings, the one or more target points to become targets in guiding the route; and a third server device to store map information; wherein the navigation device comprises: a current location calculation unit to calculate location information of the current location of the navigation device; a route information acquisition unit to receive the calculated route information from the first server device while location information of the destination and the location information of the current location calculated by the current location calculation unit is sent to the first server device; a target point location calculation unit to calculate and store location information of a location of one or more target points to become targets in guiding the route based on the route information; a first target point location extraction unit to extract location information of a location of a first target point to be passed through first in a case of progressing along the route from the current location toward the destination from one or more target points calculated and stored by the target point location calculation unit; a camera to capture an image outside of the navigation device; an angle calculation unit to calculate an azimuth angle and an elevation angle with respect to an optical axis of the camera; a target point location correction unit to correct the location of the first target point to be displayed on the display screen based on the azimuth angle and the elevation angle calculated by the angle calculation unit and location information of the navigation device; a distance-direction calculation unit to calculate a distance and a direction of progress based on the current location and the location of the first target point corrected by the target point location correction unit in a case of progressing along the route from the current location to the corrected location of the first target point; an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera, and to display on the display screen attribute information about the first target point and its surroundings over the image captured by the camera after the attribute information about the first target point and its surroundings is obtained from the second server device; a map display unit to display on the display screen the current location, the destination, the route, and the one or more target pints over a map image, which is generated after the map information is obtained from the third server device; wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location.

In the present discloser, the navigation method to provide a guidance by showing images on a display screen such that a destination can be reached via a target point to be passed through first from a current location of the navigation device is characterized by comprising: a current location calculation step of calculating location information of the current location of the navigation device; a route information acquisition step of sending location information of the destination and location information of the current location calculated in the current location calculation step to the first server device which calculates route information showing a route from the current location to the destination and receiving the calculated route information from the first server device; a target point location calculation step of calculating and storing location information of a location of one or more target points to become targets in guiding the route based on the route information; a first target point location extraction step of extracting location information of a location of a first target point to be passed through first in a case of progressing along the route from the current location toward the destination from one or more target points calculated and stored in the target point location calculation step; a step of capturing an image outside of the navigation device by a camera; an angle calculation step of calculating an azimuth angle and an elevation angle with respect to an optical axis of the camera; a target point location correction step of correcting the location of the first target point to be displayed on the display screen based on the azimuth angle and the elevation angle calculated in the angle calculation step and the location information of the navigation device; a distance-direction calculation step of calculating a distance and a direction of progress based on the current location and a location of the target point corrected in the target point correction step in a case of progressing along the route from the current location to the corrected location of the first target point; and an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera; wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location.

In the navigation method of the present disclosure, a route information calculation step of calculating the route information showing the route from the current location to the destination may be included instead for the route information acquisition step of receiving the route information from the first server device.

The present disclosure discloses a navigation program that causes a computer including a camera to capture an image outside to serve as a navigation device that provide a guidance by a display on a display screen such that a destination can be reached via a target point to be passed through first from a current location of the navigation device after the navigation program is read and executed by the computer, wherein the navigation program makes the computer conduct the steps comprising: a current location calculation step of calculating location information of the current location of the navigation device; a route information acquisition step of sending location information of the destination and location information of the current location calculated in the current location calculation step to the first server device which calculates route information showing a route from the current location to the destination and receiving the calculated route information from the first server device; a target point location calculation step of calculating and storing location information of a location of one or more target points to become targets in guiding the route based on the route information; a first target point location extraction step of extracting location information of a location of a first target point to be passed through first in a case of progressing along the route from the current location toward the destination from one or more target points calculated and stored in the target point location calculation step; a step of capturing an image outside of the navigation device by a camera; an angle calculation step of calculating an azimuth angle and an elevation angle with respect to an optical axis of the camera; a target point location correction step of correcting the location of the first target point to be displayed on the display screen based on the azimuth angle and the elevation angle calculated in the angle calculation step and the location information of the navigation device; a distance-direction calculation step of calculating a distance and a direction of progress based on the current location and a location of the target point corrected in the target point correction step in a case of progressing along the route from the current location to the corrected location of the first target point; and an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera; wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location. The present disclosure includes a storage medium recording the navigation program.

In the navigation program of the present disclosure, a route information calculation step of calculating the route information showing the route from the current location to the destination may be included instead for the route information acquisition step of receiving the route information from the first server device. The present disclosure includes a storage medium recording the navigation program.

Next, embodiments of the present disclosure will be described with reference to the drawings. Here, duplicated explanations will be omitted, and identical or equivalent parts will be marked with the same symbol in each drawing.

### [Embodiment 1]

The first embodiment is described as Example 1. According to the first embodiment, a navigation device, a navigation system, a navigation method, a navigation program, and a storage medium on which the navigation program is stored are comprised of a suitable navigation technology when moving from a current location to a destination and when moving in an urban district and are used suitably by implementing them in a mobile terminal such as a so-called smart phone. Here, this is just an example and is not used only in the case where the movement is limited in the urban district or where the application is limited to the implementation to the mobile terminal such as a smart phone.

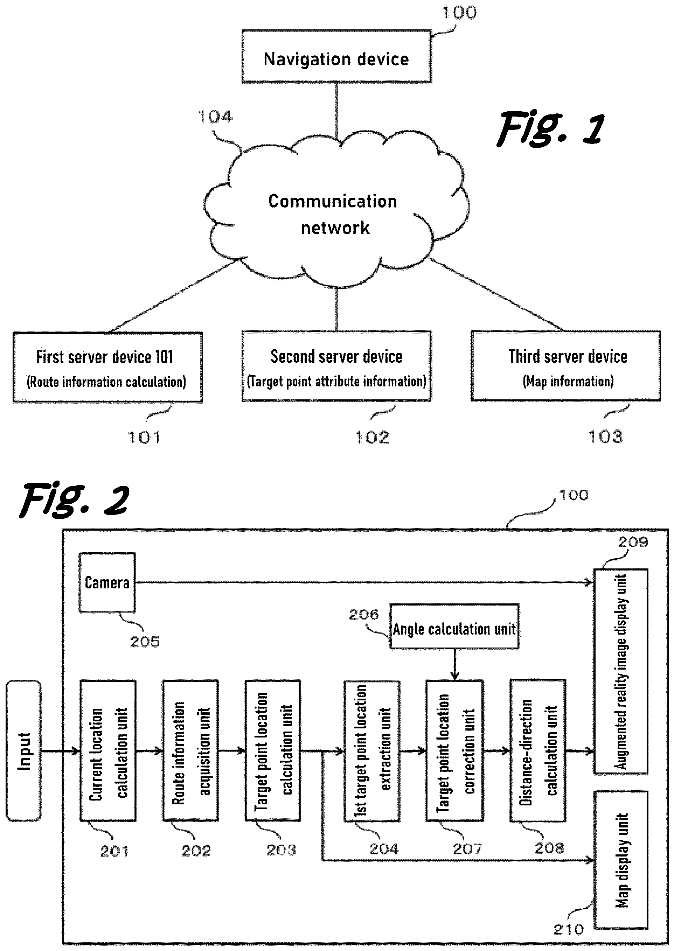

Fig. 1 shows a diagram illustrating an example of an entire configuration of the navigation system of the first embodiment. As shown in Fig. 1, the navigation system of the first embodiment is configured to include a navigation device 100 to guide a route to a destination based on location information, a first server device 101 to calculated the route from a current location to the destination, a second server device 102 to store one or more target points to become a target in guiding the route and attribute information around the one or more target points, and a third server device 103 to store map information. The navigation device 100, the first server device 101, the second server device 102, and the third server device 103 are configured to be interconnected via a communication network 104 such as the internet or the like. The first server device 101, the second server device 102, and the third server device 103 are configured to be a computer system including physically a central processing unit (CPU), an input device, an output device, a main storage device (RAM/ROM), and an auxiliary storage device. In Fig. 1, the first server device 101, the second server device 102, and the third server device 103 are separate independent individual server devices, but they may be configured physically to be a single server device as long as their functions are independently operative and a plurality of server devices, in which their functions are implemented in a disperse manner, may be configured.

The first server device 101 receives location information of the destination and location information of the current location from the navigation device 100 through the communication network and calculates route information indicating a route from the current location to the destination. The first server device 101 holds location information about links such as roads and other links and nodes such as intersections, which are necessary for calculating route information. The first server device 101 calculates route information from the location information of the current location and the location information of the destination while referring to the location information about the links and nodes that is held by the device. With respect to the method of calculating the route information, a method suitable for the purpose of guide may be adopted and the method may not be limited thereto in the present disclosure. For example, if it is the purpose to search for the shortest route, the Dijkstra method might be adopted. The calculated route information is provided to the navigation device 100 via the communication network 104.

The second server device 102 stores attribute information about one or more target points and their surroundings. In the present application, the attribute information about the target point refers to information that is useful in guiding a user of the navigation device of the present disclosure to a destination and is about the target point. For example, that includes a name of an intersection or the like. And the attribute information about the surroundings of the target point refers to information that is useful for guiding the user of the navigation device of the present disclosure to the destination, or information that is useful for the user even if it is other than for guiding, which is about the surroundings of the target point. As an example of useful information, a name and so on of a building facing the intersection, which is the target point, may be referred to. As an example of information that is useful to the user, even if it is not for guiding, information or the like such as assortment of products and prices thereof with respect to a shop located in the building facing the intersection, which is the target point, may be referred to. Here, the attribute information about one or more target points and their surroundings stored by the second server device 102 is associated with the target points using identification codes thereof uniquely set for the respective target points or location information thereof. The second server device 102 provides attribute information about the target point and surroundings thereof in response to an inquiry from the navigation device 100 via the communication network 104.

The third server device 103 stores map information. The third server device 103 provides map information in response to the inquiry from the navigation device 100 via the communication network 104.

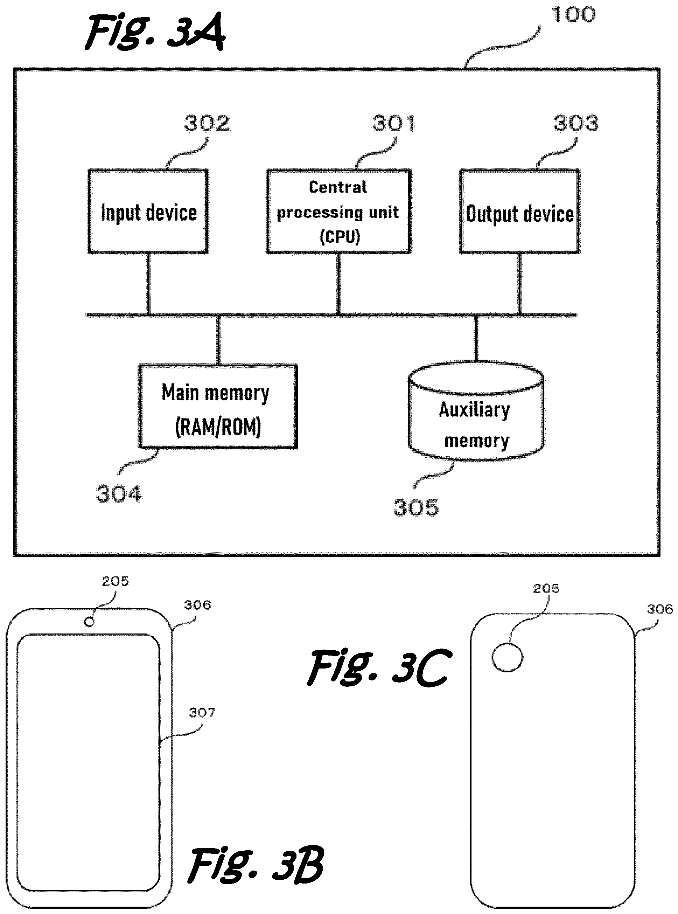

Fig. 2 shows a block diagram of the navigation system 100. The navigation device 100 may be configured as a stand-alone device as well as may be used as is incorporated into another device. The other device having the navigation device 100 incorporated therein may be a mobile electric device such as a smartphone, an information mobile terminal, a digital camera, a game terminal, and so on by way of example. The navigation device 100 is physically configured as a computer including a central processing unit (CPU) 301, an input device 302, an output device 303, a main storage device (RAM/ROM) 304, and an auxiliary storage device 305, as shown in Fig. 3A.

Each function of the navigation device 100 is realized by having the central processing unit (CPU) 301, a main storage device (RAM/ROM) 304, etc., as shown in Fig. 3A, read a program to make the computer perform the function as the navigation device 100 such that the input device 302 and the output device 304 are caused to operate under the control of the central processing unit (CPU) 301 and that data is read and written to and from the main storage device (RAM/ROM) 304 and the auxiliary storage device 305.

As shown in Fig. 2, the navigation device 100 includes a current location calculation unit 201, a route information acquisition unit 202, a target point location calculation unit 203, a first target point location extraction unit 204, a camera 205, an angle calculation unit 206, a target point location correction unit 207, a distance-direction calculation unit 208, an augmented reality image display unit 209, and a map display unit 210. Functions of each block of the navigation device 100 are described with reference to the block diagram in Fig. 2. Details of the operation will be described later.

The current location calculation unit 201 calculates location information for the current location of the navigation device.

The route information acquisition unit 202 sends the location information of the current location calculated by the current location calculation unit 201 and the location information of the destination input from the outside to the first server device 101 via the communication network 104, and receives from the first server device 101 the route information showing the route from the calculated current location to the destination.

The target point location calculation unit 203 calculates and holds location information of locations of one or more target points to become targets in the route guidance from route information received by the route information acquisition unit 202 from the first server device.

The first target point location extraction unit 204 extracts location information of the location of the first target point to be passed through first in the case of proceeding along the route from the current location to the destination from one or more target points calculated and held by the target point location calculation unit 203.

The camera 205 takes images of the outside of the navigation device 100. The taken images are sent to the augmented reality image display unit 209.

The angle calculation unit 206 calculates the azimuth angle and the elevation angle with respect to the optical axis of the camera. The calculated azimuth angle and the calculated elevation angle are sent to the target point location correction unit 207.

The target point location correction unit 207 corrects the location of the first target point extracted by the first target point location extraction unit 204 for displaying it on the augmented reality image display unit 209 of the navigation device 100 based on the location information of the navigation device 100 calculated by the current location calculation unit 201 and the azimuth angle and the elevation angle calculated by the angle calculation unit 206.

The distance-direction calculation section 208 calculates the distance and the direction when moving along the route from the current location to the corrected location of the first target point based on the first target point location corrected by the target point location correction unit 207 and the current location calculated by the current location calculation unit 201.

The augmented reality image display unit 209 generates and displays over the image captured by the camera 205 an augmented reality image showing the location of the first target point corrected by the target point location correction unit 207, the distance and the direction when moving to the corrected location of the first target point calculated by the distance-direction calculation unit 208. Also, the augmented reality image display unit 209 acquires attribute information about the first target point and its surroundings from the second server device 102, which stores the attribute information about one or more target points and their surroundings, and further displays the attribute information about the first target point and its surroundings over the image captured by the camera 205.

The map display unit 210 acquires map information from the third server device 103 that stores map information, generates a map image, and displays the current location, the destination, the route, and one or more target points over the generated map image.

Next, the operation of the navigation device 100 of the first embodiment will be described. For ease of explanation and understanding, the operation of the navigation device 100 is explained assuming that the navigation device is incorporated into a so-called smart phone as a function. Fig. 3B shows a front view of the smart phone and Fig. 3C shows a rear view of the smart phone. The smart phone 306 illustrated here includes a configuration as a computer as shown in Fig. 3A, and includes a display screen 307, which is an output device 303 that also performs a function as a touch panel, which is an input device 302, and a camera 205 for taking images of the outside. Here, the camera 205 may be located anywhere on the main body of the smart phone, for example, on the back side, in front side, or on both sides. In addition to the central processing unit 301, the main memory 304, and the auxiliary memory 305, a communication module for communication via the communication network 104, a GPS module that constitutes the current location calculation unit 201, and an orientation sensor and a gyroscope sensor that constitute the angle calculation unit 206. Here, the smart phone is just an example, and the application of the present disclosure is not limited to the smart phone only.

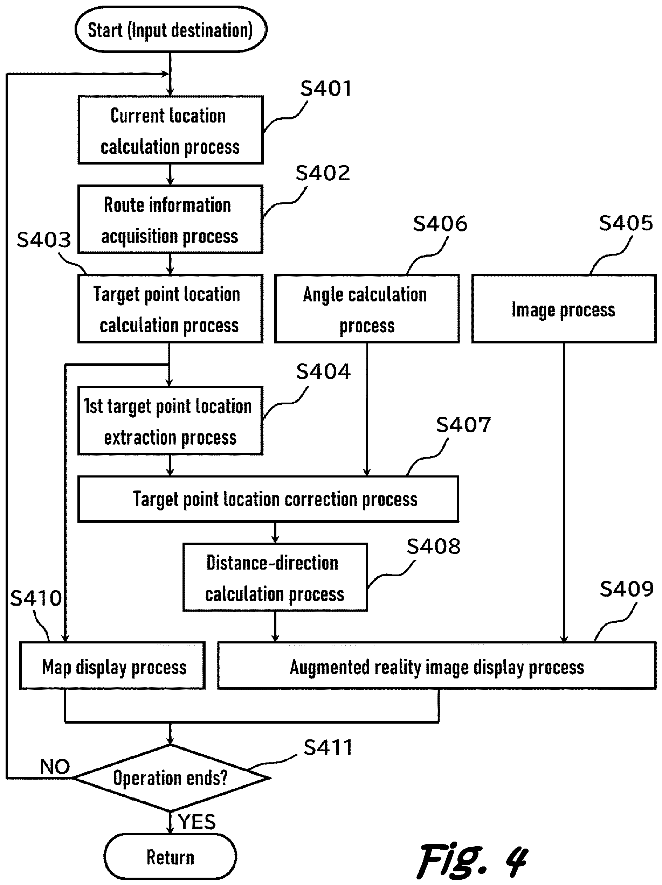

Fig. 4 shows a flowchart showing the operation of the navigation device 100 of the first embodiment. The operation of the navigation device 100 in the first embodiment is described with reference to the flowchart in Fig. 4.

The navigation device 100 stars to operate when the location information of the destination is input from the outside. The operation may be started automatically after the input of the location information of the destination or by an explicit command. When the navigation system 100 starts to operate, it performs the processing of the flowchart in Fig. 4.

When the navigation device 100 starts to operate, the current location calculation unit 201 executes the current location calculation process (S401). In the first embodiment, the current location calculation unit 201 includes a GPS module. In the current location calculation process (S401), the three-dimensional coordinates of the current location of the navigation device 100 are obtained from the GPS module so as to calculate the location information. The calculated location information of the current location of the navigation device 100 is sent and processed in a route information acquisition process (S402). When the current location calculation process (S401) by the current location calculation unit 201 ends, the route information acquisition unit 202 starts the route information acquisition process (S402).

In the route information acquisition process (S402), the location information of the current location calculated and sent in the current location calculation process (S401) and the location information of the destination input from the outside at the start of operation of the navigation device 100 is sent to the first server device 101 via the communication network 104, and route information showing a route from the calculated current location to the destination is received from the first server device 101. As mentioned above, the route information showing the route from the current location to the destination is received from the server device 101 as a collection of location information with the order along the route from the current location to the destination. The thus-received route information is brought over to the target point location calculation process (S403). When the route information acquisition process (S402) by the route information acquisition unit 202 ends, the target point location calculation unit 203 starts the target point location calculation process (S403).

In the target point location calculation process (S403), the location information of the locations of one or more target points to become targets for the route guidance is calculated and retained from the route information showing the route from the current location to the destination having been received and brought over from the first server device 101 through the route information acquisition process (S402). In the first embodiment, the point at which the direction of progress along the route changes beyond a predetermined threshold is referred to as the target point, and the location information of the target point is calculated and retained. Here, the predetermined threshold is the change in the direction of progress, which can be taken as the angle between the direction of progress so far and the direction of progress hereafter. For example, the predetermined threshold may be defined as an angle of 15 degrees or the like between the direction of progress so far and the direction of progress hereafter. The value of the angle to be utilized as the predetermined threshold may be changed according to the surrounding conditions. For example, the value of angle of the predetermined threshold may be set as follows: a value of angle of a predetermined threshold at a three-way junction is greater than that of a predetermined threshold at a four-way junction, and a value of angle of a predetermined threshold at a five-way junction is smaller than that of a predetermined threshold at a four-way junction. Here, it should be understood that the change in the direction while progressing along the route may be taken by the angle, by way of example, in the first embodiment and that any other parameters than the angle may be utilized as a parameter indicating the change in the direction of progress as long as a suitable target point can be set in guiding the route.

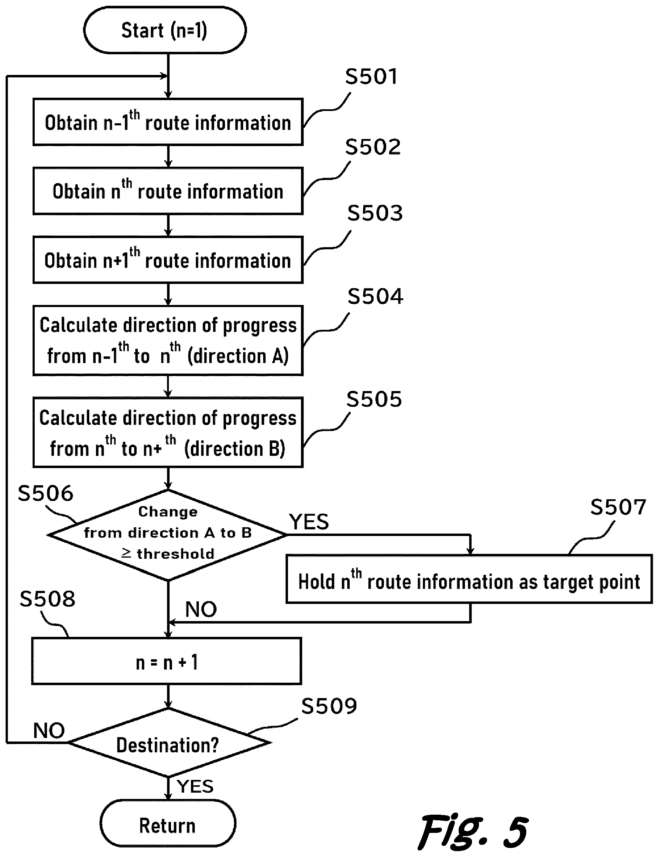

Fig. 5 shows a flowchart of a target point location calculation process (S403). The target point location calculation process (S403) is described with reference to the flowchart in Fig. 5. Since the route information showing the route from the current location to the destination is a collection of location information with the order along the route from the current location to the destination, in the flowchart in Fig. 5, the order is represented by n, and the current location is represented by n=0. The n^{th} location information with the order according to the route from the current location to the destination, which constitutes the route information, is referred to as the n^{th} route information. In the target point location calculation process (S403), the n-1^{th} route information is obtained in S501 process, the n^{th} route information is obtained in S502 process, and the n+1^{th} route information is obtained in S503 process, respectively. Next, the direction of progress from the n-1^{th} to the n^{th} is calculated in S504 and the direction of progress from the n^{th} to the n+1^{th} is calculated in S505, respectively, then it is determined in S506 whether the angle formed between the direction of progress calculated in S504 and the direction of progress calculated in S505 is greater than a predetermined value of angle of the threshold (for example, 15 degrees). If the angle is equal to or greater than the value of the predetermined threshold, the n^{th} route information is retained as the target point in the process of S507. The location information of locations of one or more target points is calculated and retained by repeating processes, after adding 1 to n in S508 so as to obtain the next route information, until the destination is reached (S509).

Returning to the flowchart in Fig. 4, the explanation continues. The location information of locations of the target points calculated and retained in the target point location calculation process (S403) is brought over to the first target point location extraction process (S404) as well as to the map display process (S410). When the target point location calculation process (S403) by the target point location calculation unit 203 ends, the first target point location extraction unit 204 starts the first target point location extraction process (S404) and the map display unit 210 starts the map display process (S410). First, the first target point location extraction process (S404) is described.

In the first target point location extraction process (S404), the location information of the location of the first target point to be passed through first in the case of progressing the route from the current location toward the destination is extracted from one or more target points having been calculated and brought over in the target point location calculation process (S403) with reference to the location information of the current location having been calculated in the current location calculation process (S401). The location information of the location of the extracted first target point location is brought over to the target point location correction process (S408). When the first target point location extraction process (S404) by the first target point location extraction unit 204 ends, the process proceeds to the target point location correction process (S407) performed by the target point location correction unit 207.

Before explaining the target point location correction process (S407), the image capture process (S405) by the camera 205 and the angle calculation process (S406) by the angle calculation unit 206 are explained. The image capture process (S405) and the angle calculation process (S406) are processes that are executed in the background after the navigation device 100 starts to operate until the operation ends.

In the image capture process (S405), images of the outside of the navigation device are taken by the camera 205 equipped with the smart phone in which the navigation device 100 is incorporated as the function. The captured image information is requested and brought over in the augmented reality image display process (S409).

In the first embodiment, the angle calculation unit 206 includes an orientation sensor and a gyroscope sensor. In the angle calculation process (S406), the azimuth angle and the elevation angle are calculated with respect to the optical axis of the camera 205 included in the smart phone in which the navigation device 100 is incorporated as the function from the information obtained from the orientation sensor and gyroscope sensor. The azimuth angle and the elevation angle with respect to the optical axis of the camera calculated in the angle calculation process (S406) are requested and brought over in the target location correction process (S407).

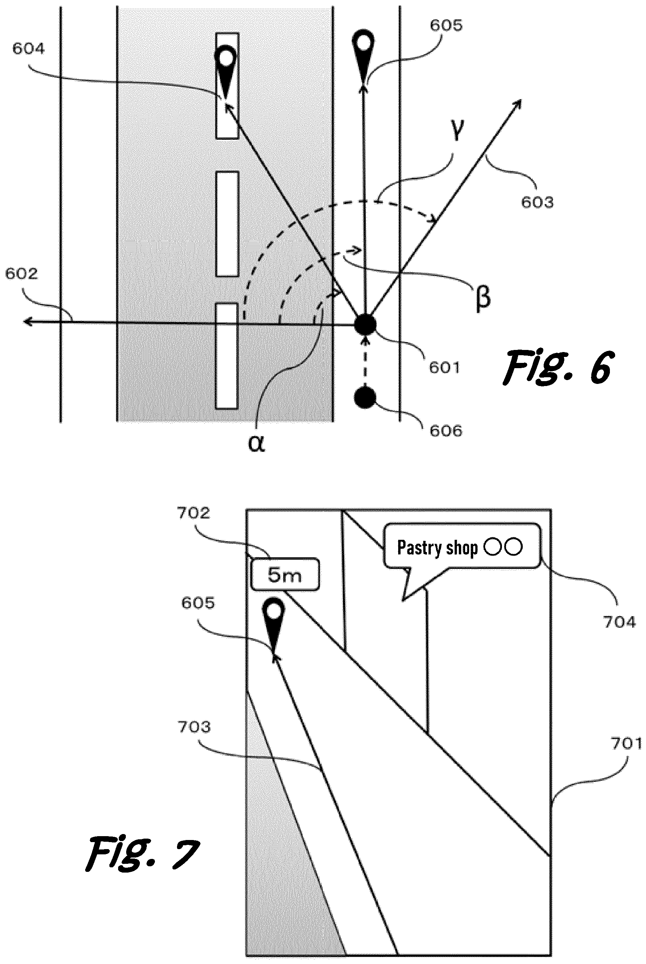

Next, the target point location correction process (S407) performed by the target point location correction unit 207 is described. Fig. 6 shows a diagram illustrating the target point location correction process (S407). The current location of the navigation device 100 is represented by 601. Fig. 6 shows a diagram viewing down the user of the navigation device 100 from the above and the user of the navigation device 100 exists on the sidewalk along the roadway. The direction of north is indicated by 602, which is the reference of the azimuth angle. The direction of the optical axis of the camera 205 included in the smart phone in which the navigation device 100 is incorporated as the function is indicated by 603. The user of the navigation device 100 is considered to be facing in the direction of 603 at the current location 601 on the sidewalk along the roadway. The location of the first target point is indicated by 604. The first target point 604 is the first target point to be passed through first in the case of progressing along the route from the current location 601 toward the destination and Fig. 6 shows an example of the case where the location of the target point calculated in the target point location calculation process (S403) is in the middle of the road of the route from the current location toward the destination. In this case, the user of the navigation device 100 is to be guided to the first target point 604, which is in the roadway. In order to avoid such a situation, in the target point location correction process (S407), the location of the first target point is corrected to the location 605 which is on the sidewalk and in the direction of progressing based on the location information of the navigation device 100 and the azimuth angle calculated in the angle calculation process (S406).

In Fig. 6, the location of the navigation device 100 at time T before the current time is indicated by 606. While time T elapses, the navigation device 100 has moved from the location 606 to the location 601. In this case, in the target point location correction process (S407) according to the first embodiment, it is assumed that the corrected location 605 of the first target point is in the direction from the location 606 to the location 601, based on the direction of the previous movement. Assuming that the azimuth angle of the first target point 604 at the current location 601 is a and that of the corrected first target point 605 is β, in the target point location correction process (S407), the location 604 of the first target point calculated in the target point location calculation process (S403) and extracted in the first target point location extraction process (S404) is corrected to the corrected location 605 of the first target point, which is rotated by angle β-α around the current location 601. Here, the corrected location 605 of the first target point is determined by the location 606 of the navigation device 100 before time T from the current time, but this is just an example and may be conducted by other methods such as determining the corrected location 605 of the first target point based on a plurality of locations of navigation device 100 before the current time. Also, the method of correction is not limited to the above-mentioned method.

In the target point location correction process (S407), values of height coordinates are then corrected to those of the camera with respect to the corrected first target point 605. Since the corrected first target point 605 is located in the center of the display screen and the elevation angle is zero when it is captured by the center of the lens of camera 205, the target point would be more easily recognized.

Returning to Fig. 4, the location information of the corrected location of the first target point calculated in the target point location correction process (S407) is brought over to the distance-direction calculation process (S408). When the target point location correction process (S407) by the target point location correction unit 207 ends, the distance travel direction calculation section 208 starts the distance-direction calculation process (S408).

In the distance-direction calculation process (S408), the distance and the direction of progress from the current location to the corrected location of the first target point are calculated based on the location information of the current location and the location information of the corrected location of the first target point brought over from the target point location correction process (S407). The calculated distance and the calculated direction of progress are brought over to the augmented reality image display process (S409). When the distance-direction calculation process (S408) by the distance-direction calculation unit 208 ends, the augmented reality image display unit 209 starts the augmented reality image display process (S409).

In the augmented reality image display process (S409), an augmented reality image is generated and displayed over the image captured by the camera 205, wherein the augmented reality image shows the location of the first target point corrected in the target point location correction process (S407), and the distance and the direction of progress in the case of progressing to the corrected location of the first target point calculated in the distance-direction calculation process (S408). Further, in the augmented reality image display process (S409), attribute information about the first target point and its surroundings is acquired from the second server device 102, which stores attribute information about one or more target points and their surroundings, and attribute information about the first target point and its surroundings is displayed over the image captured by the camera 205.

Fig. 7 shows a diagram illustrating an example of the augmented reality image generated and displayed in the augmented reality image display process (S409). Fig. 7 shows the augmented reality image when the optical axis of the camera 205 included in the smartphone, in which the navigation device 100 is incorporated as the function, is in the direction of 603 as shown in Fig. 6. The display screen, which is the output device 303 included in by the smart phone, is indicated by 701. Since the corrected location 605 of the first target point is within the screen display range of the image captured by the camera 205, a marker indicating the corrected location 605 of the first target point is superimposed on the image captured by the camera 205. In addition, the distance 702 and the direction 703 of progress in the case of progressing along the route from the current location to the corrected location of the first target point are superimposed on the image captured by the camera 205 and displayed wherein the distance 702 and the direction 703 are calculated in the distance-direction calculation process (S408) and brought over to the augmented reality image display process (S409). The attribute information about the surroundings of the first target point obtained from the second server device 102 is indicated by 704. The shape, color, and other expressions of the images superimposed to make an augmented reality image are arbitrary as long as each information is appropriately indicated wherein the images include an image of markers indicating the location of the first target point, an image indicating the distance and direction of progress from the current location to the corrected location of the first target point, and an image indicating attribute information about the first target point and its surroundings. The expressions are not limited to those of Fig. 7.

In the augmented reality image display process (S409), an augmented reality image showing the corrected location 605 of the first target point, and the distance 702 and the direction 703 of progress in the case of progressing to the corrected location of the first target point is not generated over the image captured by the camera 205 in the case where the corrected location 605 of the first target point is not included within the screen display range, but an augmented reality image showing the direction of the oriented camera 205 such that the location 605 of the first target point is included in the image captured by the camera 205.

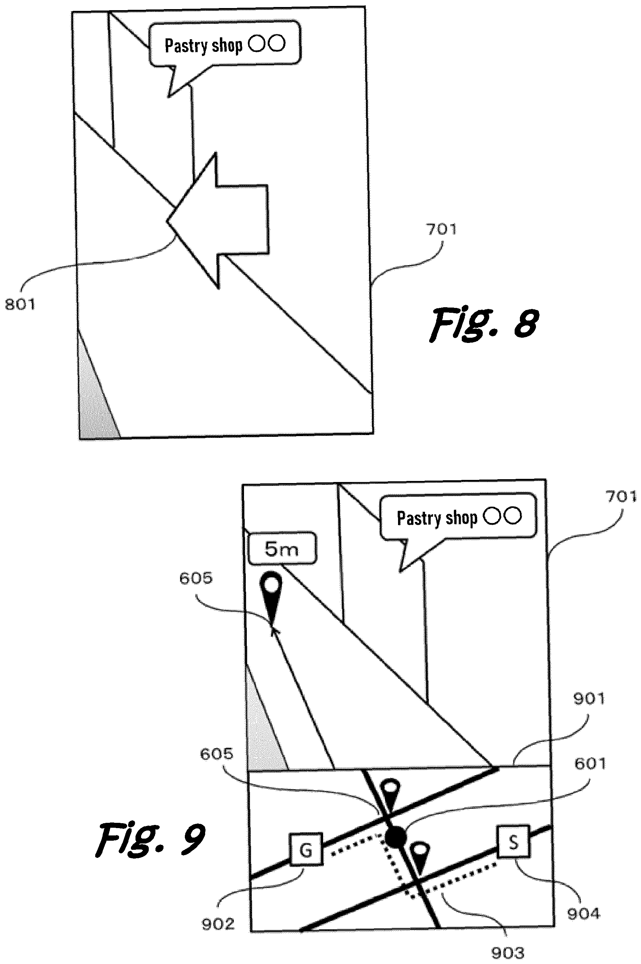

Fig. 8 shows a diagram illustrating an augmented reality image generated and displayed in the augmented reality image display process (S409) in the case where the corrected location 605 of the first target point is not within the screen display range of the image captured by the camera 205. Fig. 8 shows a diagram illustrating an augmented reality image in the case where the corrected location 605 of the first target point is not included within the screen display range of the image captured by the camera 205 since the azimuth angle γ of the optical axis of the camera 205 included in the smart phone in which the navigation device 100 is incorporated as the function is greater than that formed by the direction 603 as shown in Fig. 6. Since it is necessary to change the orientation of the camera 205 of the navigation device 100 so that the corrected location 605 of the first target point is included within the screen display range of the image captured by the camera 205, in the augmented reality image display process (S409), an augmented reality image with an icon 801 superimposed on the image captured by the camera 205 is generated and displayed wherein the icon 801 guides the direction of the camera to be oriented.

Returning to Fig. 4, the map display process (S410) is described. In the map display process (S410), map information is acquired from the third server device 103 that stores the map information and a map image is generated such that the current location, the destination, the route, and one or more target points are displayed on the generated map image.

Fig. 9 shows a diagram illustrating how the map generated in the map display process (S410) is displayed. In Fig. 9, the map image 901 is displayed at the bottom of display screen 701, which is the output device 303 included in the smart phone. Here, in addition to this, the screen may be so divided as to display the augmented reality image and the map image, or each screen may be switched therebetween and displayed. The map image 901 shows the current location 601, the destination 902, the route 903 and the target point 605, and additionally the departure point 904, superimposed on the map.

Returning to Fig. 4, when the augmented reality image display process (S409) and the map display process (S410) end, it is determined whether the operation of the navigation device 100 is completed or not (S411). If the operation of the navigation device 100 is to be continued, the processes are again performed according to the flowchart from the current location calculation process (S401). If the operation of the navigation device 100 is to be terminated, the series of processing is terminated.

The aforementioned is an explanation of the operation of the navigation device 100 in the first embodiment.

Next, a navigation program for making a computer work as a navigation device is described. The computer configuration is as shown in Fig. 3A.

The navigation program includes a main module, an input/output module, and an arithmetic processing module. The main module is a part that integrally controls the processes. The input/output module causes the computer to acquire input information such as location information of the destination, and causes the computer to output and display the augmented reality image and the map image generated as a result of a series of processes. The arithmetic processing module includes a current location calculation module, a route information acquisition module, a target point location calculation module, a first target point location extraction module, an image capture module, an angle calculation module, a target point location correction module, a distance-direction calculation module, an augmented reality image display module and a map display module. The functions realized by executing the main module, the input module and the arithmetic processing module are the same as those of the current location calculation unit 201, the route information acquisition unit 202, the target point location calculation unit 203, the first target point location extraction unit 204, the camera 205, the angle calculation unit 206, the target point location correction unit 207, the distance-direction calculation unit 208, the augmented reality image display unit 209, and the map display unit 210 of the navigation device 100, respectively.

The navigation program is provided, for example, via a recording medium such as ROM or semiconductor memory. The navigation program may also be provided via the communication network.

The aforementioned is a description of the first embodiment.

### [Embodiment 2]

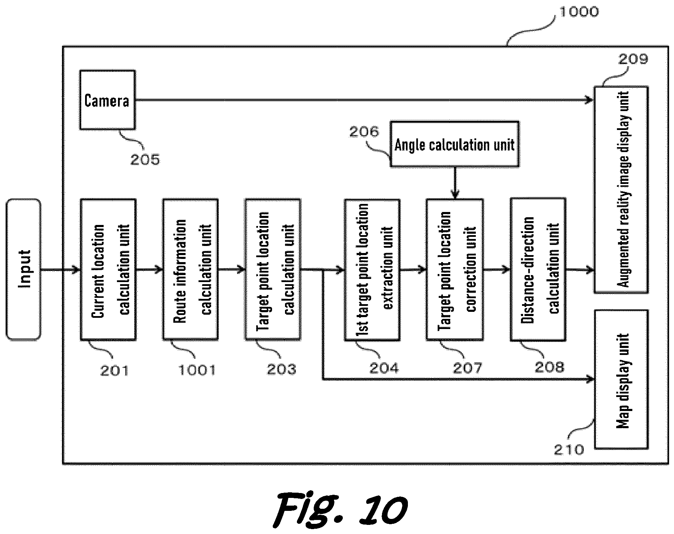

The second embodiment is described as Example 2. Fig. 10 shows a block diagram of the navigation device 1000 of the second embodiment. The navigation device 1000 of the second embodiment differs in that the location information of the current location and the location information of the destination are brought over to the first server device 101 that calculates the route information indicating the route from the current location to the destination stored by the navigation device 100 of the first embodiment and that the navigation device 1000 includes a route information calculation unit 1001 that calculates the route information showing the route from the current location to the destination instead of the route information acquisition unit 202 that receives the calculated route information from the first server device 101. Other configurations are the same.

The function of the route information calculation unit 1001 is the same as that of the first server device 101 in that the route information indicating the route from the current location to the destination is calculated based on the location information of the destination and the location information of the current location calculated by the current location calculation unit 201 and is the same as that of the route information acquisition unit 202 in that the route information showing the route from the current location to the destination is brought over to the target point location calculation unit 203. Therefore, with respect to the functions of the route information calculation unit 1001, the redundant explanation of the first embodiment is omitted.

The aforementioned is an explanation of the second embodiment.

According to the present disclosure, in the navigation device, the navigation system, the navigation method, the navigation program, and the storage medium recording the navigation program, the location information of one or more target points to become the target in guidance of the route is calculated base on the route information from the current location to the destination, and the location of the target point to be passed through first is corrected to that of the actual target point to be the target in the case of progressing the route from the current location toward the destination such that the augmented reality image in which the corrected location and the distance from the current location and the direction of progress are superimposed on the image captured by the camera is generated and displayed so as to guide the user to the destination.

### [Explanation of Numerals]

100 navigation device of first embodiment
101 first server device
102 second server device
103 third server device
104 communication network
201 current location calculation unit
202 route information acquisition unit
203 target point location calculation unit
204 first target point location extraction unit
205 camera
206 angle calculation unit
207 target point location correction unit
208 distance-direction calculation unit
209 augmented reality image display unit
210 map display unit
301 central processing unit (CPU)
302 input device
303 output device
304 main storage device (memory) (RAM/ROM)
305 auxiliary storage device (memory)
306 smart phone
307 display screen
601 current location of navigation device
602 north direction
603 direction of optical axis of camera equipped by smart phone having navigation device implemented as feature
604 location of first target point
605 corrected location of first target point
606 location of navigation device before time t from now
701 display screen
702 distance from current location to corrected location of first target point as proceeding along route
703 direction of progress
704 attribute information about periphery of the first target point acquired from second server device
801 icon to guide camera orientation
901 map image
902 destination
903 route
904 point of departure
1000 navigation device of second embodiment
1001 route information calculation unit

## Claims

1. A navigation device to provide a guidance by showing images on a display screen such that a destination can be reached via a target point to be passed through first from a current location of the navigation device, comprising:
a current location calculation unit to calculate location information of a current location of the navigation device;
a route information acquisition unit, wherein location information of the destination and the location information of the current location calculated by the current location calculation unit are sent to a first server device that calculates route information showing a route from the current location to the destination, and the route information acquisition unit receives the calculated route information from the first server device;
a target point location calculation unit to calculate and store location information of a location of one or more target points to become a target in a guidance of the route from the route information;
a first target point location extraction unit to extract location information of a location of a first target point to be passed through first, in a case of progressing the route from the current location toward the destination, from one or more target points calculated and stored by the target point location calculation unit;
a camera to capture an image outside of the navigation device;
an angle calculation unit to calculate an azimuth angle and an elevation angle with respect to an optical axis of the camera;
a target point location correction unit to correct the location of the first target point to be displayed on the display screen from the azimuth angle and the elevation angle calculated by the angle calculation unit and from location information of the navigation device;
a distance-direction calculation unit to calculate a distance and a direction of progress, in a case of progressing the route from the current location to a corrected location of the first target point, based on the current location and the location of the first target point corrected by the target point location correction unit; and
an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera;
wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location.

2. The navigation device according to claim 1, wherein the target point location correction unit corrects the location of the first target point to a location at a same height as the camera and at a same distance as that is from the current location to the corrected location of the first target point, which is on an extension of direction of progress of the navigation device calculated from a previous location information of the navigation device, such that the corrected location is displayed on the display screen.

3. The navigation device according to claim 1 or 2, wherein a point is referred to as the another first target point, at which a direction of progress changes from a previous direction of progress beyond a predetermined threshold when progressing along the route based on the route information, and the target point location calculation unit calculates and stores location information of a location of the another first target point.

4. The navigation device according to any one of claims 1 to 3,
wherein the augmented reality image display unit generates and displays an augmented reality image showing a direction to which the camera is to be oriented such that a location of the first target point is included in an image captured by the camera over the image captured by the camera in a case where the location of the first target point is not included in the image captured by the camera while an augmented reality image showing a distance and a direction of progress in a case of progressing to the corrected first target point calculated by the distance-direction calculation unit and a corrected location of the first target point by the target point location correction unit is not generated.

5. The navigation device according to any one of claims 1 to 4, wherein the augmented reality image display unit acquires attribute information about the first target point and its surroundings from a second server device that stores attribute information about the one or more target points and their surroundings, and further displays the attribute information about the first target point and its surroundings over the image captured by the camera on the display screen.

6. The navigation device according to any one of claims 1 to 5, comprising: a map display unit that acquires map information from a third server device that stores map information, generates a map image, and displays the current location, the destination, the route, and the one or more target points over the generated map image on the display screen.

7. A navigation device to provide a guidance by showing images on a display screen such that a destination can be reached via a target point to be passed through first from a current location of the navigation device, comprising:
a current location calculation unit to calculate location information of the current location of the navigation device;
a route information calculation unit to calculate route information showing a route from the current location to the destination;
a target point location calculation unit to calculate and store location information of a location of one or more target points to become a target in guiding the route from the route information;
a first target point location extraction unit to extract location information of a location of the first target point to be passed through first in a case of progressing along the route from the current location toward the destination from one or more target points calculated and stored by the target point location calculation unit;
a camera to capture an image of an outside of the navigation device;
an angle calculation unit to calculate an azimuth angle and an elevation angle with respect to an optical axis of the camera;
a target point location correction unit to correct the location of the first target point to be displayed on the display screen based on the azimuth angle and the elevation angle calculated by the angle calculation unit and the location information of the navigation device;
a distance-direction calculation unit to calculate a distance and a direction of progress in a case of progressing from the current location to the corrected location of the first target point based on the current location and the corrected location of the first target point by the target point location correction unit; and
an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera;
wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location.

8. A navigation system comprising:
a navigation device to provide guidance by display on a display screen such that a destination can be reached via a target point to be passed through first from a current location of the navigation device;
a first server device to calculate route information showing a route from the current location to the destination;
a second server device to store attribute information of one or more target points and their surroundings, the one or more target points to become targets in guiding the route; and
a third server device to store map information;
wherein the navigation device comprises:
a current location calculation unit to calculate location information of the current location of the navigation device;
a route information acquisition unit to receive the calculated route information from the first server device while location information of the destination and the location information of the current location calculated by the current location calculation unit are sent to the first server device;
a target point location calculation unit to calculate and store location information of a location of one or more target points to become targets in guiding the route based on the route information;
a first target point location extraction unit to extract location information of a location of a first target point to be passed through first in a case of progressing along the route from the current location toward the destination from one or more target points calculated and stored by the target point location calculation unit;
a camera to capture an image outside of the navigation device;
an angle calculation unit to calculate an azimuth angle and an elevation angle with respect to an optical axis of the camera;
a target point location correction unit to correct the location of the first target point to be displayed on the display screen based on the azimuth angle and the elevation angle calculated by the angle calculation unit and location information of the navigation device;
a distance-direction calculation unit to calculate a distance and a direction of progress based on the current location and the location of the first target point corrected by the target point location correction unit in a case of progressing along the route from the current location to the corrected location of the first target point; and
an augmented reality image display unit to generate and display on the display screen an augmented reality image showing a location of the first target point corrected by the target point location correction unit and a distance and a direction of progress with respect only to the first target point among one or more target points calculated and stored by the target point location calculation unit, in a case of progressing to the corrected first target point calculated by the distance-direction calculation unit, over an image captured by the camera, and to display on the display screen attribute information about the first target point and its surroundings over the image captured by the camera after the attribute information about the first target point and its surroundings is obtained from the second server device;
a map display unit to display on the display screen the current location, the destination, the route, and the one or more target pints over a map image, which is generated after the map information is obtained from the third server device;
wherein the guidance is conducted such that the destination can be reached by repeating that the augmented reality image display unit displays another first target point to be progressed toward next, after arriving at the first target point, and that the another first target point to be progressed toward next, which is displayed on the display screen, is reached from another current location.

9. A navigation method to provide a guidance by showing images on a display screen such that a destination can be reached via a target point to be passed through first from a current location of the navigation device, comprising:
a current location calculation step of calculating location information of the current location of the navigation device;
a route information acquisition step of sending location information of the destination and location information of the current location calculated in the current location calculation step to a first server device which calculates route information showing a route from the current location to the destination and receiving the calculated route information from the first server device;
a target point location calculation step of calculating and storing location information of a location of one or more target points to become targets in guiding the route based on the route information;
a first target point location extraction step of extracting location information of a location of a first target point to be passed through first in a case of progressing along the route from the current location toward the destination from one or more target points calculated and stored in the target point location calculation step;
a step of capturing an image outside of the navigation device by a camera;
an angle calculation step of calculating an azimuth angle and an elevation angle with respect to an optical axis of the camera;
a target point location correction step of correcting the location of the first target point to be displayed on the display screen based on the azimuth angle and the elevation angle calculated in the angle calculation step and the location information of the navigation device;
a distance-direction calculation step of calculating a distance and a direction of progress based on the current location and a location of the first target point corrected in the target point correction step in a case of progressing along the route from the current location to the corrected location of the first target point; and
an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera;
wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location.

10. A navigation method to provide a guidance by showing images on a display screen such that a destination can be reached via a target point to be passed through first from a current location of the navigation device, comprising:
a current location calculation step of calculating location information of the current location of the navigation device;
a route information calculation step of calculating route information showing a route from the current location to the destination;
a target point location calculation step of calculating and storing location information of a location of one or more target points to become targets in guiding the route based on the route information;
a first target point location extraction step of extracting location information of a location of a first target point to be passed through first in a case of progressing along the route from the current location toward the destination from one or more target points calculated and stored in the target point location calculation step;
a step of capturing an image outside of the navigation device by a camera;
an angle calculation step of calculating an azimuth angle and an elevation angle with respect to an optical axis of the camera;
a target point location correction step of correcting the location of the first target point to be displayed on the display screen based on the azimuth angle and the elevation angle calculated in the angle calculation step and the location information of the navigation device;
a distance-direction calculation step of calculating a distance and a direction of progress based on the current location and a location of the first target point corrected in the target point correction step in a case of progressing along the route from the current location to the corrected location of the first target point; and
an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera;
wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location.

11. A storage medium on which a navigation program is stored wherein the navigation program causes a computer including a camera to capture an image outside to serve as a navigation device that provide a guidance by a display on a display screen such that a destination can be reached via a target point to be passed through first from a current location of the navigation device after the navigation program is read and executed by the computer, wherein the navigation program makes the computer conduct the steps comprising:
a current location calculation step of calculating location information of the current location of the navigation device;
a route information acquisition step of sending location information of the destination and location information of the current location calculated in the current location calculation step to a first server device which calculates route information showing a route from the current location to the destination and receiving the calculated route information from the first server device;
a target point location calculation step of calculating and storing location information of a location of one or more target points to become targets in guiding the route based on the route information;
a first target point location extraction step of extracting location information of a location of a first target point to be passed through first in a case of progressing along the route from the current location toward the destination from one or more target points calculated and stored in the target point location calculation step;
a step of capturing an image outside of the navigation device by a camera;
an angle calculation step of calculating an azimuth angle and an elevation angle with respect to an optical axis of the camera;
a target point location correction step of correcting the location of the first target point to be displayed on the display screen based on the azimuth angle and the elevation angle calculated in the angle calculation step and the location information of the navigation device;
a distance-direction calculation step of calculating a distance and a direction of progress based on the current location and a location of the first target point corrected in the target point correction step in a case of progressing along the route from the current location to the corrected location of the first target point; and
an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera;
wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location.

12. A storage medium on which a navigation program is stored wherein the navigation program causes a computer including a camera to capture an image outside to serve as a navigation device that provide a guidance by a display on a display screen such that a destination can be reached via a target point to be passed through first from a current location of the navigation device after the navigation program is read and executed by the computer, wherein the navigation program makes the computer conduct the steps comprising:
a current location calculation step of calculating location information of the current location of the navigation device;
a route information calculation step of calculating route information showing a route from the current location to the destination;
a target point location calculation step of calculating and storing location information of a location of one or more target points to become targets in guiding the route based on the route information;
a first target point location extraction step of extracting location information of a location of a first target point to be passed through first in a case of progressing along the route from the current location toward the destination from one or more target points calculated and stored in the target point location calculation step;
a step of capturing an image outside of the navigation device by a camera;
an angle calculation step of calculating an azimuth angle and an elevation angle with respect to an optical axis of the camera;
a target point location correction step of correcting the location of the first target point to be displayed on the display screen based on the azimuth angle and the elevation angle calculated in the angle calculation step and the location information of the navigation device;
a distance-direction calculation step of calculating a distance and a direction of progress based on the current location and a location of the first target point corrected in the target point correction step in a case of progressing along the route from the current location to the corrected location of the first target point; and
an augmented reality image display step of generating and displaying on the display screen an augmented reality image showing a location of the first target point corrected in the target point location correction step and a distance and a direction of progress with respect only to the first target point among one or more target points calculated and stored in the target point location calculation step, in a case of progressing to the corrected first target point calculated in the distance-direction calculation step, over an image captured by the camera;
wherein the guidance is conducted such that the destination can be reached by repeating that another first target point to be progressed toward next is displayed, after arriving at the first target point, in the augmented reality image display step and that the another first target point to be progressed toward next, which is displayed on the display screen, is reached from another current location.
